# EUROPEAN PATENT SPECIFICATION

(11) **EP 1 895 235 B1**
(45) Date of publication and mention of the grant of the patent: **27.05.2020**
(21) Application number: 06757304.8
(22) Date of filing: 13.06.2006
(51) Int. Cl.: F23G 7/00, B09B 3/00, B09B 5/00, C10L 5/46, F23G 5/033, F23G 5/04

(54) **SYSTEM AND PROCESS FOR RECYCLING OF USED PAPER DIAPERS**
SYSTEM UND VERFAHREN ZUR WIEDERVERWERTUNG VON BENUTZTEN PAPIERWINDELN
SYSTÈME ET PROCÉDÉ SERVANT À RECYCLER LES COUCHES EN PAPIER USAGÉES

(30) Priority: 14.06.2005 JP 2005174024
(43) Date of publication of application: 05.03.2008
(73) Proprietor: Super Faiths Inc., Tokyo 150-0031 (JP)
(72) Inventor: KIMURA, Yukihiro, Tokyo 170-0012 (JP); FURUMI, Takeo, Yokohama-shi, Kanagawa 221-0863 (JP); MURATA, Kyoichi, Yokohama-shi, Kanagawa 233-0006 (JP)
(74) Representative: Strehl Schübel-Hopf & Partner
(86) International application number: PCT/JP2006/311869
(87) International publication number: WO 2006/134941

(56) References cited:
- EP-A2- 1 275 443
- JP-A- 2000 283 429
- JP-A- 2002 349 816
- JP-A- 2004 338 989

## Description

### Technical Field

The present invention relates to a system and method for recycling used disposable diapers, in which used disposable diapers are processed into a predetermined product (hereinafter such a product may be referred to as "processed waste"), whereby the disposable diapers can be effectively recycled while CO₂ emission is reduced.

### Background Art

In recent years, disposable diapers for infants and adults have been increasingly used in, for example, hospitals, nursing homes, and individual homes. Used disposable diapers are generally disposed of through incineration. However, since used disposable diapers contain water from human waste, etc., combustion of the diapers requires high temperature, which poses problems in terms of an increase in disposal cost and an increase in amount of CO₂ emission during incineration.

Under such circumstances, there have been proposed various processing methods for utilizing used disposable diapers as, for example, fuels. The proposed methods include a carbonization method making use of high-temperature steam, and a thermal processing method making use of vegetable oil.

Techniques employing the carbonization method making use of high-temperature steam include a waste processing method in which waste products are carbonized by exposing them to high-temperature steam under stirring in the absence of oxygen (see Patent Documents 1 and 2). Meanwhile, techniques employing the thermal processing method making use of vegetable oil include a method for producing a fuel, in which waste products (e.g., used disposable diapers) are thermally processed with waste vegetable oil or waste mineral oil without shredding of the waste products (see Patent Document 3).

However, each of these techniques employs a boiler or a similar apparatus during the course of production of processed waste serving as a fuel, and thus poses a problem in that the amount of CO₂ emission is not reduced, which may lead to harming the environment. That is, each of these techniques is focused only on recycling of used disposable diapers, and does not take into account reduction in the amount of CO₂, which is eventually emitted.
Patent Document 1: Japanese Patent Application Laid-Open (*kokai*) No. 2000-313884
Patent Document 2: Japanese Patent Application Laid-Open
Patent Document 3: Japanese Patent Application Laid-Open (*kokai*) No. 2001-214173

Other conventional waste treatment systems are disclosed in JP 2004 338989 A and EP 1275 443 A2, whereby JP 2004 338989 A discloses the features specified in the preambles of independent claims 1 and 5.

### Disclosure of the Invention

### Problems to be Solved by the Invention

In view of the foregoing, an object of the present invention is to provide a system and method for recycling used disposable diapers, which realizes effective recycle of used disposable diapers in the form of processed waste, and which can flexibly contribute to reduction in CO₂ emission, as compared with the case where used disposable diapers are disposed of without being converted into processed waste. Means for Solving the Problems

The object is met by the subject-matter defined in the present independent claims. In a first mode, there is provided a system for recycling used disposable diapers (hereinafter may be referred to as a "used disposable diaper recycling system"), characterized by comprising, at least, a processing apparatus for producing, from used disposable diapers serving as a raw material, processed waste having a predetermined water content and a volume reduced to a predetermined level; and a recovering facility for reutilizing the used disposable diapers by burning the processed waste as a fuel and also by recovering thermal energy.

According to the first mode, predetermined processed waste is produced from used disposable diapers serving as a raw material, and the used disposable diapers are recycled by recovering thermal energy through combustion of the processed waste as a fuel. That is, according to the first mode, used disposable diapers can be effectively recycled in the form of processed waste.

A second mode is drawn to a specific embodiment of the used disposable diaper recycling system according to the first mode, wherein the processing apparatus and the recovering facility are provided in the same institution; the recovering facility is a combustion facility for burning the processed waste as a fuel as is; and the processed waste is employed as an auxiliary fuel for heat supply in the institution.

According to the second mode, the processing apparatus and the recovering facility are provided in the same institution; the recovering facility is a combustion facility for burning the processed waste as a fuel as is; and the processed waste is employed as an auxiliary fuel for heat supply in the institution. That is, according to the second mode, used disposable diapers can be effectively recycled in the form of processed waste in the same institution.

A third mode is drawn to a specific embodiment of the used disposable diaper recycling system according to the first mode, wherein the recovering facility is provided outside of an institution in which the processing apparatus is provided, and, in the recovering facility, the processed waste is employed as a combustion material as is, or transformed into a combustion material suitable for use in the recovering facility.

According to the third mode, in the recovering facility provided outside of an institution in which the processing apparatus is provided, the processed waste is employed as a combustion material as is, or transformed into a combustion material suitable for use in the recovering facility. That is, according to the third mode, even when the recovering facility is provided outside of an institution in which the processing apparatus is provided, used disposable diapers can be effectively recycled in the form of processed waste.

According to the invention the processing apparatus comprises, at least, shredding means for shredding used disposable diapers and stirring the shredded disposable diapers together with a fermentative bacterium; and heating means for heating the shredded disposable diapers so as to regulate the water content of the shredded disposable diapers to a predetermined level, and performing sterilization through heating for a predetermined period of time, and wherein the processing apparatus produces, from used disposable diapers fed to the apparatus, processed waste which has a volume reduced to a predetermined level, and which realizes reduction in amount of CO₂ emission, as compared with the case where the used disposable diapers are burned as they are.

According to the invention, the processing apparatus produces, from used disposable diapers fed to the apparatus, processed waste which has a volume reduced to a predetermined level, and which realizes reduction in amount of CO₂ emission, as compared with the case where the used disposable diapers are burned as they are. That is, used disposable diapers can be effectively recycled in the form of processed waste, and CO₂ emission can be reduced, as compared with the case where used disposable diapers are disposed of without being converted into processed waste.

A fourth mode is drawn to a specific embodiment of the used disposable diaper recycling system according to any of the first to third modes, wherein the combustion facility is a boiler for burning the processed waste without solidification of the processed waste.

Not according to the invention, the processed waste can be burned without being solidified. That is, according to the fourth mode, used disposable diapers can be more effectively recycled in the form of processed waste.

Not according to the invention, the recycling system further comprises CO₂ reduction management means for calculating and managing the amount of CO₂ emission resulting from combustion of processed waste produced by the processing apparatus, the CO₂ emission amount being reduced as compared with the case where used disposable diapers are burned as is, wherein the CO₂ emission amount is converted to a CO₂ emission right of a certain value through calculation, and is either offered to a requesting third-party organization for payment of a reasonable value or returned to a source that has introduced the processing apparatus.

The amount of CO₂ emission resulting from combustion of processed waste - which CO₂ emission amount is reduced as compared with the case where used disposable diapers are burned as is - is calculated, and the CO₂ emission amount is converted to a CO₂ emission right through calculation on the basis a certain value, and is either offered to a requesting third-party organization for payment of a reasonable value or returned to a source that has introduced the processing apparatus. That is, employment of processed waste can flexibly contribute to reduction in CO₂ emission, as compared with the case where used disposable diapers are disposed of without being converted into processed waste.

Not according to the invention, the CO₂ emission right is calculated by the CO₂ reduction management means on the basis of, at least, the amount of processed waste fed to the recovering facility, and the amount of CO₂ emitted from the waste-fed recovering facility.

The CO₂ emission right is calculated on the basis of, at least, the amount of processed waste fed to the recovering facility, and the amount of CO₂ emitted from the waste-fed recovering facility. That is, according to the seventh mode, the amount of CO₂ emission can be reliably managed, and more flexible contribution to reduction in CO₂ emission can be achieved.

In an fifth mode, there is provided a method for recycling used disposable diapers (hereinafter may be referred to as a "used disposable diaper recycling method"), comprising, at least, producing, from used disposable diapers serving as a raw material, processed waste having a predetermined water content and a volume reduced to a predetermined level; and reutilizing the used disposable diapers by burning the processed waste as a fuel and also by recovering thermal energy. According to the fifth mode, processed waste having a predetermined water content and a volume reduced to a predetermined level is produced from used disposable diapers serving as a raw material, and thermal energy is recovered through combustion of the processed waste. That is, according to the fifth mode, used disposable diapers can be effectively recycled in the form of processed waste. According to the invention, the processed waste has a water content of 5% and a volume 1/3 that of the used disposable diapers. Processed waste having a water content of 5% and a volume 1/3 that of used disposable diapers is effectively recycled. Not according to the invention, the amount of CO₂ emission resulting from combustion of the processed waste, the CO₂ emission amount being reduced as compared with the case where used disposable diapers are burned as is, is calculated; and a CO₂ emission right which has been calculated through conversion of the CO₂ emission amount on the basis of a certain value is offered to a requesting third-party organization for payment of a reasonable value, or the CO₂ emission right is returned to a source that has introduced the processing apparatus. The amount of CO₂ emission resulting from combustion of the processed waste - which CO₂ emission amount is reduced as compared with the case where used disposable diapers are burned as they are - is calculated, and the CO₂ emission amount is converted to a CO₂ emission right through calculation on the basis of a certain value, and is either offered to a requesting a third-party organization for payment of a reasonable value or returned to a source that has introduced the processing apparatus. That is, flexible contribution to reduction in CO₂ emission can be achieved, as compared with the case where used disposable diapers are disposed of without being converted into processed waste. Not according to the invention, the CO₂ emission right, which is calculated through conversion on the basis of a certain value, is managed by an institution possessing a predetermined apparatus for producing the processed waste. The CO₂ emission right, which is calculated through conversion on the basis of a certain value, is managed by an institution possessing a predetermined apparatus for producing the processed waste. That is, according to the eleventh mode, more flexible contribution to reduction in CO₂ emission can be achieved.

### Effects of the Invention

According to the present invention, a system and method for recycling used disposable diapers are provided, in which predetermined processed waste is produced so that used disposable diapers are reutilized in a predetermined facility. The system and method of the present invention realize effective recycling of used disposable diapers in the form of processed waste, and can flexibly contribute to reduction in CO₂ emission, as compared with the case where used disposable diapers are disposed of without being converted into processed waste.

### Brief Description of the Drawings

[Fig. 1] Fig. 1 is a schematic representation showing the configuration of a used disposable diaper recycling system according to one embodiment of the present invention.
[Fig. 2] Fig. 2 is a schematic representation showing the configuration of a processing apparatus according to the embodiment of the present invention.
[Fig. 3] Fig. 3 is a cross-sectional view and plan view of the processing apparatus according to the embodiment of the present invention.
[Fig. 4] Fig. 4 is a flowchart showing a procedure for recycling used disposable diapers in the used disposable diaper recycling system according to the embodiment of the present invention.

### Description of Reference Numerals

2: Institution
10: Disposal apparatus
20: Processing apparatus
21: Processing bath
22: Shredding means
23: Heating means
24: Opening
25: Lid member
27: Hand hole door
28: Suction port
30: Rotary shaft
31: Drive means
32: Vane
37: Heating section
39: Spray pipe
40: Gas discharging means
41: Filter
42: Dust collection section
43: Exhaust pipe
44: Exhaust port
50: Deodorizing means
60: Transportation means
61: Suction pipe
62: Transportation apparatus main body
63: Bucket member
70, 90: Recovering facility
80: CO₂ reduction management means
81: Processed waste feed amount management means
82: Feed amount/electricity usage amount management means
83: Processed waste shipment management means
91: Transformation means
101: Processed waste

### Best Modes for Carrying Out the Invention

A most preferred embodiment of the present invention will next be described with reference to the drawings. The embodiment is given only for an illustration purpose, and the invention is not limited to the embodiment.

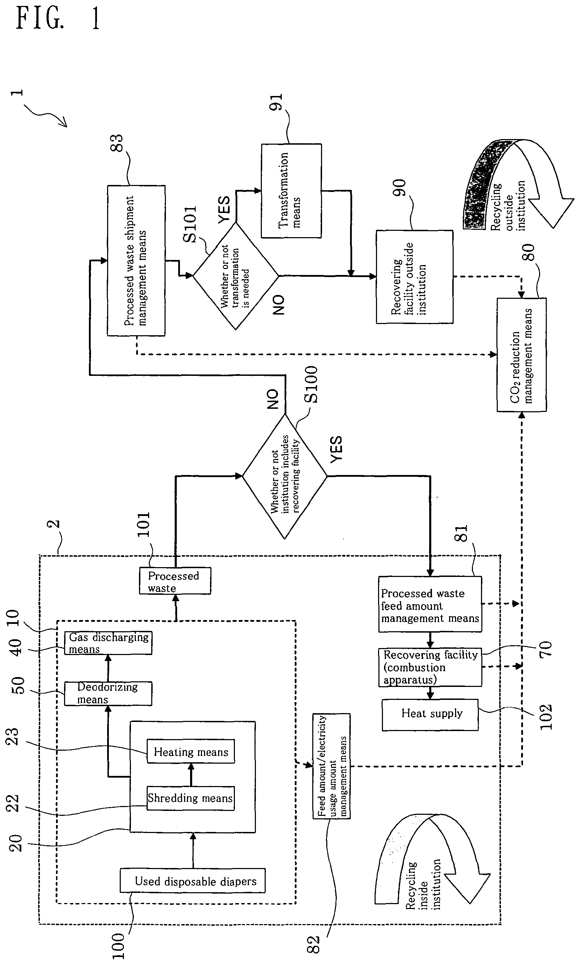

Fig. 1 is a schematic representation showing the configuration of a used disposable diaper recycling system according to one embodiment of the present invention. The present embodiment will be described by taking, as an example, the case where used disposable diapers disposed of in an institution (e.g., a hospital) are recycled in the form of processed waste inside or outside of the institution for thermal recycling.

As shown in Fig. 1, a used disposable diaper recycling system 1 includes, at least, a processing apparatus 20 for producing, from used disposable diapers 100 serving as a raw material, processed waste 101 having a predetermined water content and a volume reduced to a predetermined level; and a recovering facility 70 or 90 for reutilizing the used disposable diapers 100 by burning the processed waste 101 as a fuel and also by recovering thermal energy. The processed waste 101 has a water content of 5% and a volume about 1/3 the usual volume of the used disposable diapers, and can be employed as a combustion material inside or outside of an institution 2 in which used disposable diapers 100 are disposed of.

The recycling system 1 employs the recovering facility 70 for using the processed waste 101 inside of the institution 2 for thermal recycling; or the recovering facility 90 for using the processed waste 101 outside of the institution 2 for thermal recycling. As shown in Fig. 1, whether the processed waste 101 is employed in the recovering facility 70 or the recovering facility 90 is determined by whether or not a recovering facility is present in the institution 2 in which the processed waste 101 is produced (S100).

The recovering facility 70 and the processing apparatus 20 are provided in the same institution 2, and the recovering facility 70 is a combustion facility for burning the processed waste 101 as a fuel as is. The processed waste 101 is employed as an auxiliary fuel for heat supply 102 in the institution 2. The combustion facility is a boiler (e.g., a hot water boiler) for burning the processed waste 101 without solidification thereof. The heat supply 102 corresponds to a medium supplied through employment of the processed waste 101 as an auxiliary fuel in an apparatus or facility including a hot water system (e.g., a hot-water heater, a heated pool, or a water heater). Thus, when, for example, the institution 2 is a hospital, used disposable diapers 100 can be recycled for thermal recycling in the hospital for, for example, bathing of patients or temperature regulation in wards.

The recovering facility 90 is provided outside of the institution 2 in which the processing apparatus 20 is provided. In the recovering facility 90, the processed waste 101 is employed as a fuel as is, or transformed into a fuel suitable for use in the recovering facility. As shown in Fig. 1, treatment of the processed waste 101 outside of the institution 2 varies depending on whether or not the processed waste 101 must be transformed (S101). Specifically, when the processed waste 101 must be transformed (S101; YES), the processed waste 101 is subjected to transformation processing (e.g., compression) through the below-described transformation means 91, to thereby yield a solid fuel such as RPF (recycle plastic fuel) or RDF (refuse derived fuel). The recovering facility 90 includes, for example, an apparatus for effectively utilizing the processed waste 101 (e.g., a boiler or a gas turbine).

The transformation means 91 is an apparatus for transforming the processed waste 101 into, for example, the aforementioned solid fuel, and the transformation means 91 is, for example, a compressor. The transformation means 91 may be provided inside of the recovering facility 90, or may be provided at a site different from the site where the recovering facility 90 is provided. Thus, when, for example, the processed waste 101 is reduced in volume through compression by means of a compressor, or transformed into a solid fuel by means of a predetermined apparatus, the processed waste 101 can be employed as a combustion material in the recovering facility 90.

Upon request of a third-party organization, the processed waste 101 or a combustion material transformed therefrom may be transported to and employed in the institution. Examples of the recovering facility 90 include an electricity generating facility, a facility having a hot-water supplier or heater for providing steam or hot water, a paper-making plant, and a cement plant.

The processing apparatus 20 includes, at least, shredding means 22 for shredding used disposable diapers 100 and stirring the shredded disposable diapers together with fermentative bacteria; and heating means 23 for heating the shredded disposable diapers 100 so as to regulate the water content of the shredded disposable diapers to a predetermined level, and performing sterilization through heating for a predetermined period of time. The processing apparatus 20 produces, from used disposable diapers 100 fed to the apparatus, processed waste 101 which has a volume reduced to a predetermined level, and which realizes reduction in amount of CO₂ emission, as compared with the case where used disposable diapers are burned as they are. The processing apparatus 20 may be incorporated into a disposal apparatus 10 in combination with gas discharging means 40 for aspirating and discharging atmosphere gas generated in the interior of the processing apparatus 20, thereby attaining negative pressure in the processing apparatus 20, and deodorizing means 50 for deodorizing odorous gas which is aspirated by the gas discharging means 40.

The used disposable diaper recycling system 1 may further include, in the institution 2, CO₂ reduction management means 80 for calculating and managing the amount of CO₂ emission resulting from combustion of processed waste 101 produced by the processing apparatus 20, the CO₂ emission amount being reduced as compared with the case where used disposable diapers 100 are burned as they are. When the amount of CO₂ emitted through usual disposal of used disposable diapers, and the amount of CO₂ emitted through employment of the processed waste 101 are input to and managed by the CO₂ reduction management means 80 per unit amount of used disposable diapers 100 fed to the apparatus 20, the amount of reduction in CO₂ emission is calculated.

Specifically, the recycling system 1 further includes, for the purpose of assisting the CO₂ reduction management means 80, processed waste feed amount management means 81 for managing the amount of the processed waste 101 fed to the recovering facility 70; feed amount/electricity usage amount management means 82 for managing the amount of used disposable diapers 100 fed to the processing apparatus 20, and the amount of electricity used during processing in the disposal apparatus 10 including the processing apparatus 20; and processed waste shipment management means 83 for managing data on shipment of the processed waste 101. When data managed by the management means 81, 82, and 83, and the amount of CO₂ emitted from the recovering facility 70 or 90 are input to the CO₂ reduction management means 80, the amount of CO₂ emission, which is eventually reduced inside or outside of the institution 2, is calculated. Data managed by the processed waste shipment management means 83 are input when the amount of CO₂ emitted outside of the institution 2 is calculated. Meanwhile, data managed by the feed amount/electricity usage amount management means 82 are not necessarily input when the amount of CO₂ emitted inside of the institution 2 is calculated. Specifically, since the feed amount/electricity usage amount management means 82 manages data on the amount of electricity consumed for the production of the processed waste 101, when, for example, the amount of processing per day is predetermined, and the amount of used disposable diapers 100 fed or the amount of electricity usage is not varied, a fixed value may be input to the CO₂ reduction management means 80. The processed waste shipment management means 83 employs detailed arrangements (e.g., shipment destination, shipment completion, and shipment period) contracted and concluded in advance according to, for example, a manifest.

The amount of CO₂ emission calculated by the CO₂ reduction management means 80 is converted, on the basis of a certain value, into a CO₂ emission right having a trading value, and the CO₂ emission right is managed as a value corresponding to right of CO₂ emission. The CO₂ reduction management means 80 is managed by an institution possessing the disposal apparatus 10 including the processing apparatus 20. No particular limitation is imposed on the CO₂ reduction management means 80, so long as the means 80 has, for example, common computer functions. The CO₂ reduction management means 80 is, for example, a server or a personal computer. The CO₂ reduction management means 80 may be operated in a wired or wireless communication environment.

Thus, the amount of reduction in CO₂ emission is converted into a CO₂ emission right having a trading value, and, for example, the CO₂ emission right is offered to a requesting third-party organization for payment of a reasonable value, or is returned to a source that has introduced the disposal apparatus 10. Specifically, the CO₂ emission right converted by the CO₂ reduction management means 80 is stored and managed by the institution possessing the disposal apparatus 10 (i.e., the supplier of the processing apparatus 20), and the CO₂ emission right is offered to, for example, a requesting third-party organization for payment of a reasonable value.

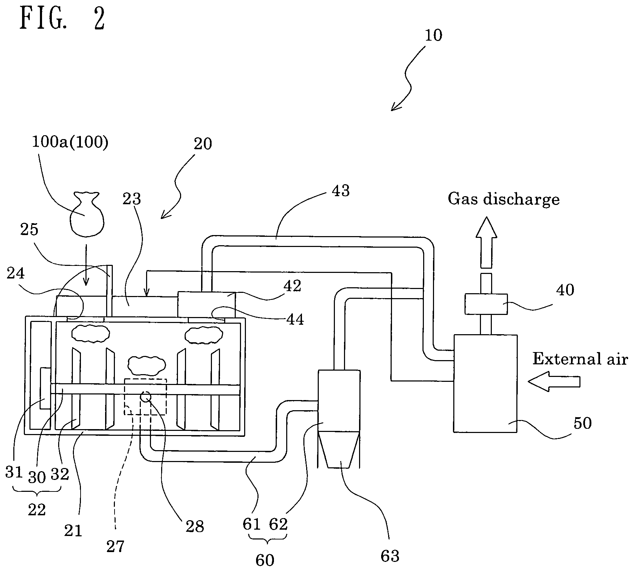

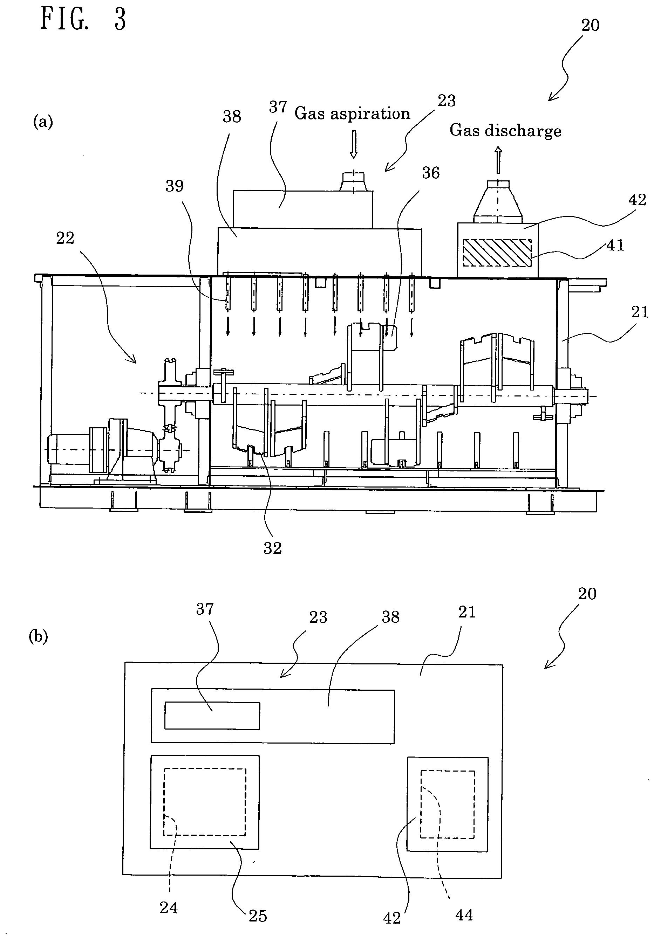

The apparatus 20 will now be described specifically. Fig. 2 is a schematic representation showing the configuration of the processing apparatus according to the embodiment of the present invention; and Fig. 3 is a cross-sectional view and top plan view of the processing apparatus according to the embodiment of the present invention. Fig. 2 shows the disposal apparatus 10 including the processing apparatus 20 in combination with the gas discharging means 40 and the deodorizing means 50. The following description is focused on the disposal apparatus 10.

As shown in Fig. 2, the disposal apparatus 10 of the present embodiment includes the processing apparatus 20 having a processing bath 21 to which used disposable diapers 100 are fed; the gas discharging means 40 for aspirating and discharging atmosphere gas in the interior of the processing bath 21, thereby attaining negative pressure in the processing bath 21; the deodorizing means 50 for deodorizing gas which is discharged by the gas discharging means 40; and transportation means 60 for discharging, from the processing bath 21, processed waste 101 produced in the processing bath 21.

As shown in Fig. 2, the processing apparatus 20 includes the processing bath 21; the shredding means 22 for shredding used disposable diapers 100 and stirring the shredded disposable diapers together with fermentative bacteria, the shredding means 22 being provided in the processing bath 21; and the heating means 23 for heating the processing bath 21 to a predetermined temperature, thereby fermenting organic substances deposited on the used disposable diapers 100 and regulating the water content of the used disposable diapers 100 containing fermented organic substances, and for performing sterilization through heating for a predetermined period of time before discharge of the processed waste.

Specifically, the processing bath 21 has a box-like shape, and has a semi-cylindrical inner bottom corresponding to rotation of the below-described vanes 32. That is, the processing bath 21 has a vaulted space therein. As shown in Fig. 2, the processing bath 21 has, at one end thereof (in a longitudinal direction) and the top thereof (in a vertical direction), an opening 24 through which used disposable diapers 100 are fed. The opening 24 has such an area that a hermetically sealed disposal bag 100a made of, for example, polyethylene and containing a plurality of used disposable diapers 100 can be fed therethrough. In the present embodiment, for example, the opening 24 has such an area that a 70-L disposal bag 100a can be fed therethrough.

The processing bath 21 has, on a top surface thereof (in a vertical direction), a lid member 25 for covering the opening 24. The opening 24 can be opened or closed by automatically moving the lid member 25 by means of, for example, a non-illustrated drive motor. The disposal bag 100a is fed through the opening 24, and, if necessary, fermentative bacteria required for fermentation are appropriately fed through the opening 24. As used herein, the term "fermentation" refers to degradation of human waste, pulp, etc. by microorganisms. No particular limitation is imposed on the specific fermentative bacterium employed for degradation of human waste, etc., and any known fermentative bacteria may be employed. The fermentative bacterium employed for fermentation may be an aerobic microorganism or an anaerobic microorganism. However, an aerobic microorganism is preferably employed, from the viewpoints of easy management and low level of odor generated during fermentation.

The processing bath 21 has, at the center of a side thereof (in a longitudinal direction), a rectangular hand hole for performing inspection and maintenance of the interior of the bath. The hand hole can be opened or closed by means of a hand hole door 27. The hand hole door 27 is provided with a circular suction port 28 to which a transportation means 60 is connected.

The processing bath 21 includes therein the shredding means 22 for shredding used disposable diapers 100. The shredding means 22 includes a rotary shaft 30 provided so as to extend in a longitudinal direction of the processing bath 21; drive means 31 (e.g., a drive motor) for rotating the rotary shaft 30, the drive means 31 being provided on one end portion of the rotary shaft 30; and a plurality of vanes 32 provided in an axial direction of the rotary shaft 30 at predetermined intervals. When a plurality of vanes 32 are spirally provided around the rotary shaft 30 at predetermined intervals, in accordance with the direction of rotation of the rotary shaft, used disposable diapers 100 are brought together to a suction port 28 provided at the center of the processing bath, or diffused to left and right sides of the bath.

In the shredding means 22, as described above, while used disposable diapers 100 are shredded and cut under stirring, they are brought together to the suction port 28 through forward rotation of the rotary shaft, or diffused to both ends of the processing bath 21 through reverse rotation of the rotary shaft. Since fermentative bacteria are fed into the processing bath 21 through the opening 24 together with used disposable diapers 100, in the shredding means 22, the used disposable diapers 100 are stirred together with the fermentative bacteria while being shredded and cut, whereby fermentation is performed.

The processing bath 21 has, on the top thereof, the heating means 23 for heating the processing bath 21. As shown in Fig. 3, the heating means 23 includes a heating section 37 (e.g., a heater or an electric heater); a hot gas reservoir 38 for storing heated oxygen-containing gas; and spray pipes 39 for downwardly spraying, into the processing bath 21, the heated oxygen-containing gas stored in the hot gas reservoir 38, the spray pipes 39 being provided at the top (in a vertical direction) of the processing bath 21.

The hot gas reservoir 38, which has a predetermined length, is provided on the top of the processing bath 21 so as to extend from one end of the bath, at which the opening 24 is provided, to the vicinity of an exhaust port 44 which is provided at the other end of the bath. A plurality of spray pipes 39 are provided on the bottom (in a vertical direction) of the hot gas reservoir 38 at predetermined intervals in a longitudinal direction so that one end of each of the spray pipes 39 is fixed to and communicated with the hot gas reservoir 38. The exhaust port 44, to which the gas discharging means 40 for aspirating and discharging atmosphere gas in the processing bath 21 is connected, is provided on the top of the processing bath 21 at the end opposite the longitudinal one end at which the opening 24 is provided. The hot gas reservoir 38 does not extend to a region on which the exhaust port 44 is provided, so that the spray pipes 39 are provided a predetermined distance away from the exhaust port 44. Therefore, oxygen-containing gas sprayed from the spray pipes 39 is not discharged directly through the exhaust port 44, and reduction in heating efficiency of the processing bath 21 is prevented.

Through use of the heating means 23, heated oxygen-containing gas in the hot gas reservoir 38 can be uniformly sprayed from the spray pipes 39 into the processing bath 21, to thereby heat the entire processing bath 21 to a predetermined temperature. The heating means 23 according to the present embodiment is configured so that a shredded product obtained through the shredding means 22 is controlled by a first heating temperature for heating the processing bath 21 for promoting the activity of fermentative bacteria during fermentation and drying the shredded product, to thereby yield a fermented product, and by a second heating temperature for sterilizing the fermented product in the processing bath 21 through heating, and evaporating water remaining in the fermented product, to thereby yield predetermined processed product. Through use of the heating means 23, predetermined processed waste 101 can be produced.

Fermentation capacity of the processing apparatus 20 varies depending on, for example, the size of the processing bath 21. The processing apparatus 20 according to the present embodiment has a fermentation capacity of 300 kg/day (fermentation time: about 12 hours). When used disposable diapers 100 are fed to the processing apparatus 20 for shredding/cutting, fermentation, drying, and heating/sterilization, processed waste 101 having a volume about 1/3 that of the used disposable diapers 100 can be produced. Thus, since the processed waste 101 produced in the processing apparatus 20 is reduced in volume and is finely divided, the processed waste 101 can be readily transported and subjected to granulation or molding. In addition, since the processed waste 101 is dried to form only a substance suitable for combustion, the processed waste 101 has physical properties which are very suitable for resource recycling (e.g., thermal recycling).

As shown in Fig. 2, the processing bath 21 is provided with the gas discharging means 40 (e.g., a suction/exhaust fan or a vacuum pump) for aspirating and discharging atmosphere gas in the processing bath 21, thereby attaining negative pressure in the processing bath 21, via an exhaust pipe 43 connected to the exhaust port 44.

Specifically, the exhaust port 44 is provided on the top of the processing bath 21, and a box-shaped dust collection section 42 including a filter 41 therein is provided on a region facing the exhaust port 44. The gas discharging means 40 is connected to the dust collection section 42 via the exhaust pipe 43 connected to the section 42.

When atmosphere gas in the processing bath 21 is aspirated and discharged by the gas discharging means 40 so that negative pressure is attained in the bath 21, fine dust, etc. contained in the atmosphere gas are collected by the filter 41.

The deodorizing means 50 for deodorizing atmosphere gas aspirated from the processing bath 21 by the gas discharging means 40 is provided on the way of the exhaust pipe 43 provided between the processing bath 21 and the gas discharging means 40, whereby the atmosphere gas is deodorized through heat exchange treatment.

As shown in Fig. 2, the processing bath 21 further includes the transportation means 60 for discharging, to the outside of the processing bath 21, processed waste 101 produced from used disposable diapers 100 through fermentation, cutting/shredding, and drying. The transportation means 60 includes a transportation apparatus main body 62 which is connected, via a suction pipe 61 (e.g., a flexible hose), to the suction port 28 provided at the center (in a width direction) of the processing bath 21 and at a position slightly downward of the rotary shaft in a height direction.

The transportation apparatus main body 62 is, for example, a gas-blowing/discharging apparatus or a vacuum pump for aspirating processed waste 101 in the processing bath 21, thereby transporting the processed waste 101. The processed waste 101 aspirated by the transportation apparatus main body 62 is stored in a bucket member 63 provided below the transportation apparatus main body 62. Atmosphere gas in the processing bath 21, which is aspirated simultaneous with aspiration of the processed waste 101 by the transportation means 60, is deodorized by the deodorizing means 50 connected to the exhaust pipe 43 of the gas discharging means 40, and then discharged to the outside.

Since used disposable diapers 100 fed to the aforementioned processing apparatus 20 is converted into processed waste 101 having a volume about 1/3 that of the used disposable diapers 100, when the processed waste 101 is employed as a fuel inside or outside of the institution 2, the amount of CO₂ emission can be reduced, as compared with the case where used disposable diapers 100 are burned as is.

Next will be specifically described the amount of CO₂ emission under the assumption that used disposable diapers 100 contain water in an amount of 65%. In general, when used disposable diapers 100 are burned as is at 300 kg/day for one month, the amount of CO₂ emission is 169 kg per month (30 days). In contrast, in the present embodiment, when used disposable diapers 100 (300 kg/day) are recycled in the form of processed waste 101 as a fuel for one month (30 days), the amount of CO₂ emission is reduced by 2,209 kg per month. Therefore, as compared with the case where used disposable diapers 100 are disposed of without being converted into processed waste 101, the amount of CO₂ emission can be reduced by 2,378 kg/month, and the amount of CO₂ emission can be reduced by 28,536 kg (i.e., about 30 t) per year. In the present embodiment, the amount of electricity used (consumed) by the disposal apparatus 10 is 333 kWh per month.

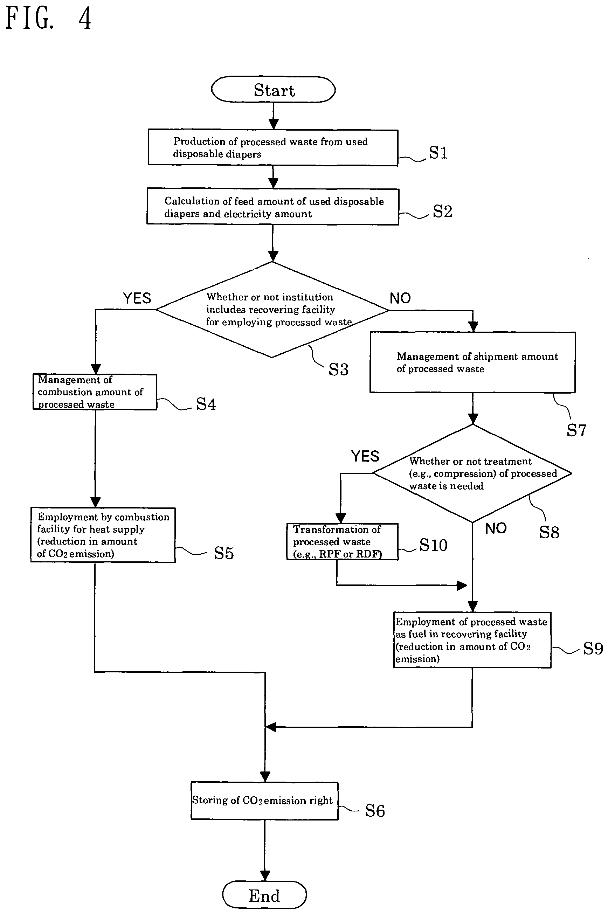

Next will be described a procedure for recycling used disposable diapers 100. Fig. 4 is a flowchart showing a procedure for recycling used disposable diapers in the used disposable diaper recycling system according to the embodiment of the present invention.

Firstly, in the institution 2, used disposable diapers 100 are fed in a predetermined amount to the processing apparatus 20, and processed waste 101 is produced (S1). The amount of the used disposable diapers 100 fed to the processing apparatus 20 and the amount of electricity used for producing the processed waste 101 are calculated and managed by the feed amount/electricity usage amount management means 82 (S2). In the case where the institution 2 includes the recovering facility 70 for employing the processed waste 101 (S3; YES), when a predetermined amount of the processed waste 101 is fed, as a fuel, to the recovering facility 70 (i.e., a combustion facility), the amount of combustion of the processed waste 101 is managed (S4), and the resultant heat is supplied in the institution 2 (S5). That is, the amount of the processed waste 101 fed to the recovering facility 70 is managed by the processed waste feed amount management means 81, and the amount of combustion of the thus-fed processed waste 101 is managed as the amount of CO₂ emission. In this case, the amount of CO₂ emission is reduced, as compared with the case where used disposable diapers 100 are burned as is. The amount of reduction in CO₂ emission is converted into a CO₂ emission right, and the CO₂ emission right is stored in and managed by the CO₂ reduction management means 80 (S6). In the CO₂ reduction management means 80, data on the processed waste 101 produced by the processing apparatus 20 and employed inside or outside of the institution 2 are managed by an institution possessing the disposal apparatus 10 including the processing apparatus 20. The institution manages, for example, the amount of CO₂ emission in the case where used disposable diapers 100 are disposed of through incineration as usual; the amount of CO₂ emission per unit volume of the processed waste 101; the amount of reduction in CO₂ emission; and a value converted from the amount of reduction in CO₂ emission for managing the reduction amount in the form of a CO₂ emission right. This system can contribute to reduction in amount of CO₂ emission by recycling used disposable diapers 100.

Meanwhile, in the case where the institution 2 does not include the recovering facility 70 for employing the processed waste 101 (S3; NO), the thus-produced processed waste 101 is provided to the recovering facility 90 outside of the institution 2. That is, the shipment amount of the processed waste 101 provided outside of the institution 2 is managed by the processed waste shipment management means 83 (S7). Whether or not the processed waste 101 can be employed as is in the recovering facility 90 (i.e., whether or not the processed waste 101 must be subjected to treatment (e.g., compression)) is determined (S8). Since the processed waste 101 is a cut product produced mainly from paper and having a water content of 5%, if necessary, the processed waste is further processed into a form suitable for use in the recovering facility 90.

When the processed waste 101 is not required to be subjected to any treatment (e.g., compression) (S8; NO), the processed waste 101 is employed as a fuel as is in the recovering facility 90 (S9). In this case, similar to the case of step 5 (S5), the amount of CO₂ emission is reduced, as compared with the case where used disposable diapers 100 are burned as is. The amount of reduction in CO₂ emission is converted into a CO₂ emission right, and the CO₂ emission right is stored in and managed by the CO₂ reduction management means 80 (S6).

Meanwhile, when the processed waste 101 must be subjected to treatment (e.g., compression) (S8; YES), the processed waste 101 is transformed so as to be suitable for the recovering facility 90 and then employed therein (S10). For example, the processed waste 101 is reduced in volume by a compressor included in the recovering facility 90 or the transformation means 91, or transformed into a solid fuel (e.g., RPF or RDF) by means of a predetermined facility, whereby the processed waste 101 can be flexibly applied to a variety of uses. Thus, the processed waste 101 in the form of solid fuel can be employed instead of a fossil fuel (e.g., coal or coke). The thus-transformed processed waste 101 may be transported to and employed in another facility.

As described above, in the present embodiment, processed waste 101 produced from used disposable diapers 100 (i.e., a raw material) in the processing apparatus 20 is burned (employed) in the recovering facility 70 or 90, whereby, eventually, the amount of CO₂ emission can be reduced, as compared with the case where used disposable diapers 100 are burned as they are. When the amount of CO₂ emission, which is reduced through production of the processed waste 101, is converted into another element (i.e., a CO₂ emission right), for example, a third-party organization or an institution discharging CO₂ can flexibly take measures to reduce CO₂ emission upon request.

According to the present embodiment, for example, an institution possessing the disposal apparatus 10 including the aforementioned processing apparatus 20 can manage a CO₂ emission right having a trading value on the basis of the amount of CO₂ emission, which is reduced through production of the processed waste 101. For example, the managed CO₂ emission right can be offered to a requesting third-party organization for, for example, payment of a reasonable value.

## Claims

1. A used disposable diaper recycling system (1), comprising:
a processing apparatus (20) for producing processed waste (101), from used disposable diapers (100) serving as a raw material, the processed waste (101) having a predetermined water content and a volume reduced to a predetermined level; and
a recovering facility (70, 90) for re-utilising the used disposable diapers (100) by burning the processed waste (101) as a fuel and recovering thermal energy;
wherein the processing apparatus (20) comprises:
a processing bath (21);
shredding means (22) for shredding used disposable diapers (100) and stirring the shredded disposable diapers together with a fermentative bacterium; and
heating means (23) for heating the shredded disposable diapers so as to regulate their water content to a predetermined level, and performing sterilisation through heating for a predetermined period of time,
**characterized in that** the heating means (23) is configured so that the shredded disposable diapers are controlled by a first heating temperature for heating the processing bath (21) for promoting the activity of fermentative bacteria during fermentation and drying the shredded disposable diapers, to thereby yield a fermented product, and by a second heating temperature for sterilizing the fermented product in the processing bath (21), and evaporating water remaining in the fermented product, to thereby yield the processed waste (101), so that the processing apparatus (20) is adapted to convert the used disposable diapers (100) fed to the apparatus into the processed waste (101) which has a water content of 5 % and a volume 1/3 that of the used disposable diapers (100), thereby realizing reduction in the amount of CO₂ emission, as compared with the case where the used disposable diapers (100) are burned as they are.

2. The system of claim 1, wherein
the processing apparatus (20) and the recovering facility (70) are provided in a same institution (2);
the recovering facility (70) is a combustion facility for burning the processed waste (101) as a fuel as it is; and
the recovering facility (70) is adapted to employ the processed waste (101) as an auxiliary fuel for heat supply in the institution (2).

3. The system of claim 1, wherein the recovering facility (90) is provided outside of an institution (2) in which the processing apparatus (20) is provided, and the recovering facility (90) is adapted to employ the processed waste (101) either as a combustion material as is, or transformed into a combustion material suitable for use in the recovering facility (90).

4. The system of any preceding claim, wherein the combustion facility is a boiler for burning the processed waste (101) without solidification of the processed waste (101).

5. A method for recycling used disposable diapers (100), comprising:
producing, from used disposable diapers (100) serving as a raw material, processed waste (101) having a water content of 5 % and a volume 1/3 that of the used disposable diapers (100); and
re-utilising the used disposable diapers (100) by burning the processed waste (101) as a fuel and recovering thermal energy;
wherein the processed waste (101) is produced by:
shredding used disposable diapers (100) and stirring the shredded disposable diapers together with a fermentative bacterium;
heating the shredded disposable diapers so as to regulate the water content of the shredded disposable diapers to a predetermined level, wherein the heating of the shredded disposable diapers is controlled by a first heating temperature for heating the processing bath (21) for promoting the activity of fermentative bacteria during fermentation and drying the shredded disposable diapers, to thereby yield a fermented product;
performing sterilisation through heating for a predetermined period of time at a second heating temperature for sterilizing the fermented product in the processing bath (21); and
evaporating water remaining in the fermented product.

## Patentansprüche

1. Recycling-System für gebrauchte Wegwerfwindeln (1), mit
einer Verarbeitungsvorrichtung (20) zum Erzeugen von verarbeitetem Abfall (101) aus gebrauchten Wegwerfwindeln (100), die als Rohmaterial dienen, wobei der verarbeitete Abfall (101) einen vorbestimmten Wassergehalt und ein auf ein vorbestimmtes Niveau reduziertes Volumen aufweist; und
einer Rückgewinnungsanlage (70, 90) zur Wiederverwendung der gebrauchten Wegwerfwindeln (100) durch Verbrennung des verarbeiteten Abfalls (101) als Brennstoff und zur Rückgewinnung von Wärmeenergie;
wobei die Verarbeitungsvorrichtung (20) umfasst:
ein Verarbeitungsbad (21);
eine Zerkleinerungseinrichtung (22) zum Zerkleinern gebrauchter Wegwerfwindeln (100) und zum Zusammenrühren der zerkleinerten Wegwerfwindeln mit einem Fermentationsbakterium; und
eine Heizeinrichtung (23) zum Erwärmen der zerkleinerten Wegwerfwindeln, um ihren Wassergehalt auf ein vorbestimmtes Niveau zu regulieren, und zum Durchführen einer Sterilisation durch Erwärmen für eine vorbestimmte Zeitdauer,
**dadurch gekennzeichnet, dass** die Heizeinrichtung (23) so konfiguriert ist, dass die zerkleinerten Wegwerfwindeln durch eine erste Heiztemperatur zum Erhitzen des Verarbeitungsbads (21) zur Förderung der Aktivität von Fermentationsbakterien während der Fermentation und zum Trocknen der zerkleinerten Wegwerfwindeln, um dadurch ein fermentiertes Produkt zu erhalten, und durch eine zweite Heiztemperatur zum Sterilisieren des fermentierten Produktes in dem Verarbeitungsbad (21) und zum Verdampfen von Wasser, das in dem fermentierten Produkt verbleibt, gesteuert werden, um dadurch den verarbeiteten Abfall (101) zu erhalten, so dass die Verarbeitungsvorrichtung (20) dazu ausgelegt ist, die der Vorrichtung zugeführten gebrauchten Wegwerfwindeln (100) in den verarbeiteten Abfall (101) umzuwandeln, der einen Wassergehalt von 5 % und ein Volumen von 1/3 desjenigen der gebrauchten Wegwerfwindeln (100) aufweist, wodurch eine Verringerung der Menge an CO₂-Emission im Vergleich zu dem Fall realisiert wird, in dem die gebrauchten Wegwerfwindeln (100) so verbrannt werden, wie sie sind.

2. System von Anspruch 1, wobei
die Verarbeitungsvorrichtung (20) und die Rückgewinnungsanlage (70) in derselben Einrichtung (2) bereitgestellt werden;
die Rückgewinnungsanlage (70) eine Verbrennungsanlage ist, um den verarbeiteten Abfall (101) als Brennstoff so zu verbrennen wie er ist; und
die Rückgewinnungsanlage (70) dazu ausgelegt ist, den verarbeiteten Abfall (101) als Hilfsbrennstoff für die Wärmeversorgung der Einrichtung (2) zu verwenden.

3. System von Anspruch 1, bei dem die Rückgewinnungsanlage (90) außerhalb einer Einrichtung (2) vorgesehen ist, in der die Verarbeitungsvorrichtung (20) vorgesehen ist, und die Rückgewinnungsanlage (90) dazu ausgelegt ist, den verarbeiteten Abfall (101) entweder wie er ist als Brennmaterial zu verwenden, oder als ein zur Verwendung in der Rückgewinnungsanlage (90) geeignetes umgewandeltes Brennmaterial.

4. System nach einem der vorstehenden Ansprüche, wobei die Verbrennungsanlage ein Kessel zur Verbrennung des verarbeiteten Abfalls (101) ohne Verfestigung des verarbeiteten Abfalls (101) ist.

5. Verfahren zum Recycling gebrauchter Wegwerfwindeln (100), in dem
aus gebrauchten Wegwerfwindeln (100), die als Rohmaterial dienen, verarbeiteter Abfall (101) hergestellt wird, der einen Wassergehalt von 5 % und ein Volumen von 1/3 desjenigen der gebrauchten Wegwerfwindeln (100) hat; und
die gebrauchten Wegwerfwindeln (100) durch Verbrennung des verarbeiteten Abfalls (101) als Brennstoff wiederverwendet und Wärmeenergie rückgewonnen wird;
wobei der verarbeitete Abfall (101) erzeugt wird durch:
Zerkleinern gebrauchter Wegwerfwindeln (100) und Zusammenrühren der zerkleinerten Wegwerfwindeln mit einem Fermentationsbakterium;
Erwärmen der zerkleinerten Wegwerfwindeln, um den Wassergehalt der zerkleinerten Wegwerfwindeln auf ein vorbestimmtes Niveau zu regulieren, wobei das Erwärmen der zerkleinerten Wegwerfwindeln durch eine erste Erwärmungstemperatur zum Erwärmen des Verarbeitungsbades (21) zur Förderung der Aktivität von Fermentationsbakterien während der Fermentation und zum Trocknen der zerkleinerten Wegwerfwindeln gesteuert wird, um dadurch ein fermentiertes Produkt zu erhalten;
Durchführen einer Sterilisation durch Erhitzen für eine vorbestimmte Zeitdauer bei einer zweiten Heiztemperatur zum Sterilisieren des fermentierten Produkts in dem Verarbeitungsbad (21); und
Verdampfen von in dem fermentierten Produkt verbleibendem Wasser.

## Revendications

1. Système (1) de recyclage de couches jetables usagées, comprenant :
un appareil de traitement (20) pour produire un rebut traité (101), à partir de couches jetables usagées (100) servant comme une matière première, le rebut traité (101) ayant une teneur en eau et un volume prédéterminés réduits à un niveau prédéterminé ; et
une installation de récupération (70, 90) pour réutiliser les couches jetables usagées (100) en brûlant le rebut traité (101) comme un combustible et récupérer l'énergie thermique ;
dans lequel l'appareil de traitement (20) comprend :
un bain de traitement (21) ;
un moyen de déchiquetage (22) pour déchiqueter des couches jetables usagées (100) et agiter les couches jetables déchiquetées ensemble avec une bactérie fermentative ; et
un moyen de chauffage (23) pour chauffer les couches jetables déchiquetées de manière à réguler leur teneur en eau à un niveau prédéterminé, et exécuter une stérilisation par chauffage sur une période temps prédéterminée,
**caractérisé en ce que** le moyen de chauffage (23) est configuré de telle manière que les couches jetables déchiquetées sont contrôlées par une première température de chauffage pour chauffer le bain de traitement (21) pour favoriser l'activité de bactéries fermentatives lors de la fermentation et sécher les couches jetables déchiquetées, pour ainsi obtenir un produit fermenté, et par une deuxième température de chauffage pour stériliser le produit fermenté dans le bain de traitement (21), et évaporer de l'eau restant dans le produit fermenté, pour ainsi obtenir le rebut traité (101), de telle sorte que l'appareil de traitement (20) est adapté à convertir les couches jetables usagées (100) alimentées dans l'appareil en le rebut traité (101) qui a une teneur en eau de 5% et un volume de 1/3 de celui des couches jetables usagées (100), réalisant ainsi une réduction de la quantité d'émission de CO₂, par comparaison avec le cas où les couches jetables usagées (100) sont brûlées en l'état.

2. Système selon la revendication 1, dans lequel
l'appareil de traitement (20) et l'installation de récupération (70) sont prévus dans un même établissement (2) ;
l'installation de récupération (70) est une installation de combustion pour brûler le rebut traité (101) comme un combustible en l'état ; et
l'installation de récupération (70) est adaptée à employer le rebut traité (101) comme un combustible auxiliaire pour une alimentation de chaleur dans l'établissement (2).

3. Système selon la revendication 1, dans lequel l'installation de récupération (90) est prévue à l'extérieur d'un établissement (2) dans lequel l'appareil de traitement (20) est prévu, et l'installation de récupération (90) est adaptée à employer le rebut traité (101) soit comme un matériau de combustion en l'état, soit transformé en un matériau de combustion approprié à une utilisation dans l'installation de récupération (90).

4. Système selon une quelconque revendication précédente, dans lequel l'installation de combustion est une chaudière pour brûler le rebut traité (101) sans solidification du rebut traité (101).

5. Procédé de recyclage de couches jetables usagées (100), comprenant :
la production, à partir de couches jetables usagées (100) servant comme une matière première, d'un rebut traité (101) ayant une teneur en eau de 5% et un volume de 1/3 de celui des couches jetables usagées (100) ; et
la réutilisation des couches jetables usagées (100) en brûlant le rebut traité (101) comme un combustible et la récupération de l'énergie thermique ;
dans lequel le rebut traité (101) est produit par :
déchiquetage de couches jetables usagées (100) et agitation des couches jetables déchiquetées ensemble avec une bactérie fermentative ;
chauffage des couches jetables déchiquetées de manière à réguler la teneur en eau des couches jetables déchiquetées à un niveau prédéterminé, dans lequel le chauffage des couches jetables déchiquetées est contrôlé par une première température de chauffage pour chauffer le bain de traitement (21) pour favoriser l'activité de bactéries fermentatives lors de la fermentation et sécher les couches jetables déchiquetées, pour ainsi obtenir un produit fermenté ;
exécution d'une stérilisation par chauffage sur une période de temps prédéterminée à une deuxième température de chauffage pour stériliser le produit fermenté dans le bain de traitement (21) ; et
évaporation de l'eau restant dans le produit fermenté.
